# EUROPÄISCHE PATENTSCHRIFT

(11) **EP 3 591 807 B1**
(45) Veröffentlichungstag und Bekanntmachung des Hinweises auf die Patenterteilung: **17.02.2021**
(21) Anmeldenummer: 18181997.0
(22) Anmeldetag: 05.07.2018
(51) Int. Cl.: H02K 1/24, H02K 1/27

(54) **ROTOR FÜR EINEN SYNCHRON-RELUKTANZMOTOR**
ROTOR FOR A SYNCHRONOUS RELUCTANCE MOTOR
ROTOR POUR UN MOTEUR À RELUCTANCE SYNCHRONE

(43) Veröffentlichungstag der Anmeldung: 08.01.2020
(73) Patentinhaber: JULI Motorenwerk, s.r.o., 66448 Moravany (CZ)
(72) Erfinder: Höll, Jan, 63500 Brno (CZ)
(74) Vertreter: Hauck Patentanwaltspartnerschaft mbB

(56) Entgegenhaltungen:
- DE-A1-102005 062 922
- TW-B- I 527 343
- PAOLO GUGLIELMI ET AL: "Permanent-Magnet Minimization in PM-Assisted Synchronous Reluctance Motors for Wide Speed Range", IEEE TRANSACTIONS ON INDUSTRY APPLICATIONS, IEEE SERVICE CENTER, PISCATAWAY, NJ, US, Bd. 49, Nr. 1, 1. Januar 2013 (2013-01-01) , Seiten 31-41, XP011487565, ISSN: 0093-9994, DOI: 10.1109/TIA.2012.2229372

## Beschreibung

Die Erfindung betrifft einen Rotor für einen Synchron-Reluktanzmotor. Bei dieser Bauform eines Elektromotors wird ein Drehmoment auf den Rotor durch die sogenannte Reluktanzkraft erzeugt, die eine Vorzugsrichtung des Rotors, in der dieser einen besonders geringen magnetischen Widerstand aufweist, in Richtung eines von einem Stator des Synchron-Reluktanzmotors erzeugten, magnetischen Felds auszurichten sucht.

Bekannte Rotoren für Synchron-Reluktanzmotoren werden aus einem weichmagnetischen Material hergestellt, insbesondere aus einer Vielzahl von zu einem Paket zusammengestellten Elektroblechen. Um die Vorzugsrichtungen mit geringem magnetischem Widerstand auszubilden, weist der Rotor eine Vielzahl von Flussbarrieren auf, die den magnetischen Widerstand in von den Vorzugsrichtungen verschiedenen Richtungen erhöhen. Hierzu werden die Elektrobleche zumeist in geeigneter Weise ausgestanzt, sodass Hohlräume entstehen, die von dem weichmagnetischen Material umgeben sind.

Form und Anzahl der Flussbarrieren sind für die Eigenschaften des Synchron-Reluktanzmotors wichtig. Angestrebt wird ein möglichst geringer magnetischer Widerstand entlang der magnetischen Vorzugsrichtungen, die auch als d-Achsen bezeichnet werden, und zugleich ein möglichst hoher magnetischer Widerstand entlang der dazu versetzt angeordneten q-Achsen. Gleichzeitig muss der Rotor eine hohe mechanische Stabilität aufweisen, um den auftretenden Belastungen auch bei hohen Drehzahlen auf Dauer standhalten zu können.

Bei sogenannten Permanentmagnet-unterstützten Synchron-Reluktanzmotoren werden die Flussbarrieren mit Permanentmagneten ausgestattet, wodurch die elektromagnetischen Parameter des Rotors verbessert werden können. Insbesondere können ein Wirkungsgrad, ein maximales Drehmoment und eine maximale Leistung erhöht werden. Allerdings verursacht der Einsatz von Permanentmagneten erhebliche zusätzliche Kosten, einerseits für die Permanentmagneten, andererseits für die kompliziertere Herstellung der Rotoren, und kann sich außerdem nachteilig auf bestimmte elektromagnetische Eigenschaften des Synchron-Reluktanzmotors auswirken. Insbesondere kann es zu einer höheren Drehmomentwelligkeit und zu einem höheren Anteil von Oberwellen kommen.

Aus dem Fachartikel "Rotor Flux-Barrier Design for Torque Ripple Reduction in Synchronous Reluctance and PM-Assisted Synchronous Reluctance Motors" von Nicola Bianchi et al., IEEE Transactions on Industry Applications, Vol. 45, No. 3, May/June 2009, Seiten 921 bis 928 sind Rotoren für Synchron-Reluktanzmotoren mit Flussbarrieren, die jeweils einen Permanentmagneten aufweisen, bekannt geworden. Die Flussbarrieren weisen unterschiedliche Abmessungen auf und die Abmessungen der zugehörigen Permanentmagneten sind individuell darauf abgestimmt. Um die Drehmomentwelligkeit zu reduzieren, schlägt der Artikel vor, Flussbarrieren unterschiedlicher Geometrien für die verschiedenen Kreissektoren zu kombinieren.

Aus dem Fachartikel "Permanent-Magnet Minimization in PM-Assisted Synchronous Reluctance Motors for Wide Speed Range" von Paolo Guglielmi, IEEE Transactions on Industry Applications, Vol. 49, No. 1, January/February 2013, Seiten 31 bis 41 sind Rotoren für Synchron-Reluktanzmotoren mit Flussbarrieren bekannt geworden, denen jeweils ein individuell auf die jeweilige Flussbarriere abgestimmter Permanentmagnet zugeordnet ist. Mit Blick auf die Herstellungskosten wird vorgeschlagen, die Höhen der Permanentmagneten zu reduzieren.

Die beiden Druckschriften DE 10 2005 062 922 A1 und TW 1527343 B zeigen jeweils bei der Diskussion des in den Druckschriften berücksichtigten Stands der Technik einen Rotor für einen Synchron-Reluktanzmotor mit den Merkmalen des Oberbegriffs des Anspruchs 1.

Davon ausgehend ist es die Aufgabe der Erfindung, einen Synchron-Reluktanzmotor mit einer Anzahl von Flussbarrieren mit Permanentmagneten zur Verfügung zu stellen, der günstige elektromagnetische Parameter insbesondere hinsichtlich der Drehmomentwelligkeit und des Anteils der Oberwellen aufweist und der zugleich besonders kostengünstig hergestellt werden kann.

Diese Aufgabe wird gelöst durch den Rotor für einen Synchron-Reluktanzmotor mit den Merkmalen des Anspruchs 1. Vorteilhaft Ausgestaltungen sind in den Unteransprüchen angegeben.

Der Rotor ist für einen Synchron-Reluktanzmotor bestimmt und weist einen Querschnitt mit einem Außenumfang und einer Anzahl von Kreissektoren auf, wobei jeder Kreissektor eine q-Achse und eine Anzahl von Flussbarrieren aufweist, wobei jede Flussbarriere symmetrisch zu der q-Achse ausgebildet ist und folgendes aufweist:
- zwei Enden, die jeweils von einem tangential angeordneten Steg von dem Außenumfang getrennt sind,
- eine zwischen den beiden Enden verlaufende Mittellinie,
- eine orthogonal zu der Mittellinie zu messende Breite und
- einen auf der q-Achse angeordneten Permanentmagneten, wobei
- die Breiten der Flussbarrieren, jeweils gemessen benachbart zu dem jeweiligen Permanentmagneten, sich um nicht mehr als 20% voneinander unterscheiden,
- alle Permanentmagneten in Richtung der q-Achse dieselbe Permanentmagnethöhe und orthogonal zu der q-Achse dieselbe Permanentmagnetbreite aufweisen und
- das Verhältnis der Permanentmagnethöhe zur Breite der zugehörigen Flussbarriere, gemessen benachbart zu dem jeweiligen Permanentmagneten, im Bereich von 0,5 bis 0,9 liegt.

Sämtliche jetzt und im Folgenden beschriebenen Linien und Abmessungen befinden sich in dem betrachteten Querschnitt des Rotors. Der Querschnitt verläuft orthogonal zu einer Rotationsachse des Rotors.

Jeder der Kreissektoren erstreckt sich über einen bestimmten Winkelbereich, wobei die Summe der Winkelbereiche aller Kreissektoren 360° beträgt. Jeder Kreissektor hat eine q-Achse, die eine Symmetrieachse des Kreissektors bildet. Außerdem weist der Rotor eine der Anzahl von q-Achsen entsprechende Anzahl von d-Achsen auf, die jeweils zwischen zwei benachbarten Kreissektoren angeordnet sind.

Die Flussbarrieren sind jeweils bis nahe an den Außenumfang des Rotors herangeführt, wo sie an einen im Wesentlichen tangential verlaufenden Steg angrenzen, der die Flussbarriere von dem Außenumfang trennt. Der Außenumfang kann kreisförmig ausgebildet sein. Die Stege der unterschiedlichen Flussbarrieren können unterschiedliche Breiten oder jeweils dieselbe Breite aufweisen. Natürlich kann die Breite eines Stegs auch über seine Länge variieren, je nach Formgebung der Enden der Flussbarrieren.

Jede Flussbarriere weist eine Mittellinie auf, die in der Mitte zwischen einer radial außenliegenden Grenzlinie und einer radial innenliegenden Grenzlinie der jeweiligen Flussbarriere verläuft. Die Mittellinie kann gekrümmt und/oder abgewinkelt und/oder abschnittsweise geradlinig sein. Die Breite einer Flussbarriere wird orthogonal zu ihrer Mittellinie betrachtet. Sie kann über die Länge der Flussbarriere variieren oder über die gesamte Länge der Flussbarriere im Wesentlichen gleich groß sein.

Jede Flussbarriere weist einen Permanentmagneten auf, der auf der q-Achse angeordnet ist, also bezogen auf die Längsrichtung der Flussbarriere in deren Mitte angeordnet ist.

Jede Flussbarriere weist gemessen benachbart zu dem zu dieser Flussbarriere gehörenden Permanentmagneten eine bestimmte Breite auf. Bei dieser Breite kann es sich insbesondere um eine maximale Breite der jeweiligen Flussbarriere handeln. Die benachbart zu dem jeweiligen Permanentmagneten gemessenen Breiten aller Flussbarrieren unterscheiden sich voneinander um nicht mehr als 20 %. Wahlweise können die Breiten der Flussbarrieren so gewählt werden, dass sie sich um nicht mehr als 10 % oder um nicht mehr als 5 % voneinander unterscheiden. Somit weisen alle Flussbarrieren in ihren an den Permanentmagneten angrenzenden Längsabschnitten im Wesentlichen dieselbe Breite auf.

Außerdem weisen alle Permanentmagneten in Richtung der q-Achse dieselbe Permanentmagnethöhe und orthogonal dazu dieselbe Permanentmagnetbreite auf. Insbesondere können die Permanentmagneten in dem betrachteten Querschnitt eine rechteckige Grundform aufweisen, gegebenenfalls mit abgerundeten Ecken. In jedem Fall weisen alle Permanentmagneten in dem betrachteten Querschnitt dieselben Abmessungen auf.

Das Verhältnis der Permanentmagnethöhe zur Breite der zugehörigen Flussbarriere, wiederum gemessen benachbart zu dem jeweiligen Permanentmagneten, liegt bei der Erfindung im Bereich von 0,5 bis 0,9. Die Höhe der Permanentmagneten ist also geringer als die angrenzende Breite der jeweils zugehörigen Flussbarriere.

Die erfindungsgemäße Vereinheitlichung der Abmessungen aller Permanentmagneten führt zu erheblichen Kostenvorteilen sowohl bei der Beschaffung und Lagerhaltung der Permanentmagneten als auch bei der Montage der Rotoren. Überraschend wurde festgestellt, dass bei gleichzeitiger Vereinheitlichung der Breiten der Flussbarrieren zugleich vorteilhafte elektromagnetische Parameter, insbesondere hinsichtlich der auftretenden Drehmomentwelligkeit und des Anteils der Oberwellen, erzielt werden.

In einer Ausgestaltung weisen alle Flussbarrieren, jeweils gemessen benachbart zu dem jeweiligen Permanentmagneten, die gleiche Breite auf. Diese noch weitergehende Vereinheitlichung der geometrischen Auslegung der Flussbarrieren trägt zu den vorteilhaften elektromagnetischen Parametern des Rotors bei.

In einer Ausgestaltung unterscheiden sich die Abstände zwischen je zwei benachbarten Flussbarrieren um nicht mehr als 20 % voneinander. Wahlweise können sich die genannten Abstände um nicht mehr als 10 % oder um nicht mehr als 5 % voneinander unterscheiden. Die Abstände entsprechen der jeweiligen Breite der zwischen den Flussbarrieren angeordneten, magnetflussleitenden Segmente. Überraschend hat sich gezeigt, dass die Vereinheitlichung dieser Breiten die elektromagnetischen Parameter des Rotors weiter verbessern kann.

In einer Ausgestaltung liegt das Verhältnis der Permanentmagnethöhe zur Breite der zugehörigen Flussbarriere, gemessen benachbart zu dem jeweiligen Permanentmagneten, im Bereich von 0,7 bis 0,85. Auch diese Wahl trägt zu den günstigen elektromagnetischen Parametern des Rotors bei.

In einer Ausgestaltung sind die Flussbarrieren als Ausschnitte in einem magnetflussleitenden Material ausgebildet, wobei in mindestens einer Flussbarriere mindestens ein quer zu seiner Mittellinie angeordneter Steg ausgebildet ist. Durch den Steg wird die mechanische Festigkeit des Rotors verbessert.

In einer Ausgestaltung weist jede der Flussbarrieren zwei der Stege auf, die den jeweiligen Permanentmagneten seitlich einfassen. Dadurch wird die exakte Positionierung und Befestigung der Permanentmagneten vereinfacht.

In einer Ausgestaltung sind die Permanentmagneten in Richtung der q-Achse relativ zu der Mittellinie der jeweils zugehörigen Flussbarriere versetzt angeordnet. Grundsätzlich kommt auch eine Anordnung der Permanentmagneten ohne Versatz, also symmetrisch zu der Mittellinie, in Betracht. Eine versetzte Anordnung kann jedoch die elektromagnetischen Parameter des Rotors weiter verbessern.

In einer Ausgestaltung sind die Permanentmagneten derart versetzt angeordnet, dass ihre radial nach außen weisenden Enden jeweils bündig mit einer radial äußeren Grenzlinie der zugehörigen Flussbarriere abschließen. Diese Anordnung hat sich als besonders vorteilhaft herausgestellt.

In einer Ausgestaltung sind die Abstände zwischen je zwei benachbarten Flussbarrieren entlang des Außenumfangs gleich groß. Die genannten Abstände entsprechen der Breite der magnetflussleitenden Segmente in der Nähe des Außenumfangs. Ihre gleichgroße Wahl trägt zu den elektromagnetisch vorteilhaften Parametern des Rotors bei.

In einer Ausgestaltung ist die Breite einer Flussbarriere nahe dem Außenumfang geringer als benachbart zu dem jeweiligen Permanentmagneten. Die Breite der Flussbarriere nimmt also mit zunehmendem Abstand von der q-Achse ab. Wahlweise können nur bestimmte Flussbarrieren innerhalb jedes Kreissektors oder sämtliche Flussbarrieren in dieser Weise geformt werden. Eine weitere Verbesserung der elektromagnetischen Parameter des Rotors ist auf diesem Weg möglich.

In einer Ausgestaltung weist jede Flussbarriere genau einen Permanentmagneten auf. Gegenüber einer grundsätzlich ebenfalls möglichen Verwendung mehrerer Permanentmagneten je Flussbarriere wird ein besonders einfacher Aufbau mit entsprechend günstigen Kosten möglich.

In einer Ausgestaltung sind genau vier Kreissektoren vorhanden. Es handelt sich dann um einen vierpoligen Rotor.

In einer Ausgestaltung weist jeder der Kreissektoren genau zwei, genau drei oder genau vier Flussbarrieren auf. Grundsätzlich kann die Erfindung auch mit einer größeren Anzahl von Flussbarrieren verwirklicht werden. Eine Beschränkung auf nur zwei, drei oder vier Flussbarrieren stellt jedoch eine besonders einfache und kostengünstige Lösung dar.

Nachfolgend wird die Erfindung anhand eines in zwei Figuren dargestellten Ausführungsbeispiels näher erläutert. Es zeigen:
- Fig. 1: einen Querschnitt durch eine Hälfte eines Synchron-Reluktanzmotors,
- Fig. 2: einen vergrößerten Ausschnitt des Rotors aus Figur 1.

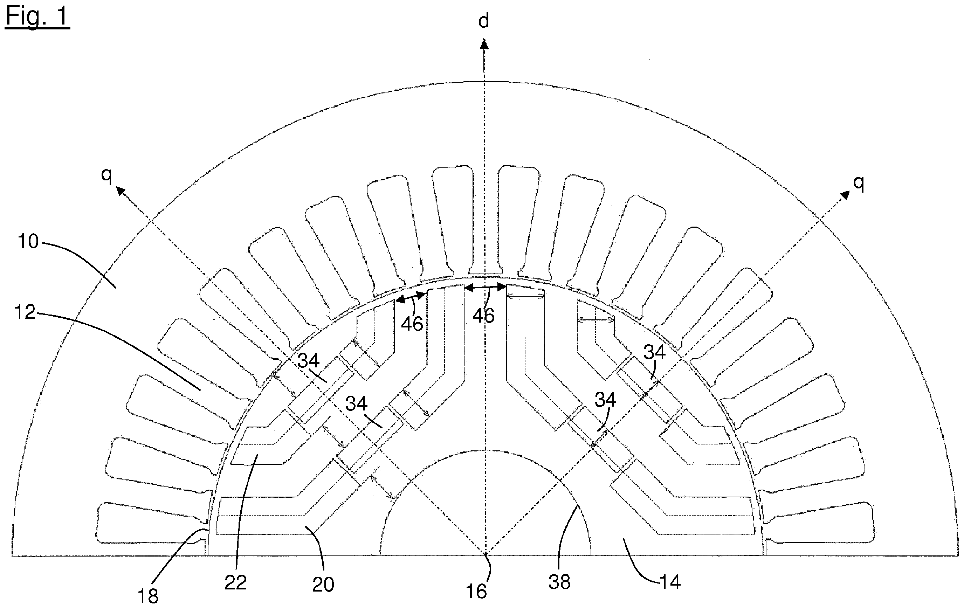

Der in Fig. 1 nur zur Hälfte dargestellte Synchron-Reluktanzmotor hat einen Stator 10 mit einer Vielzahl von Statorpolen 12 und einen innerhalb des Stators 10 angeordneten Rotor 14. Der Rotor 14 rotiert um eine in seinem Mittelpunkt angeordnete Rotationsachse 16, die senkrecht zur Zeichenebene verläuft. Ein Außenumfang 18 des Rotors 14 ist durch einen Luftspalt von einem Innenumfang des Stators 10 getrennt.

Die in der Fig. 1 dargestellte Hälfte des Rotors 14 weist zwei Kreissektoren auf, die sich jeweils über einen Winkelbereich von 90° erstrecken und die jeweils eine q-Achse aufweisen. Symmetrisch zu der q-Achse weist jeder Kreissektor zwei Flussbarrieren auf, nämlich eine in Radialrichtung innenliegende, innere Flussbarriere 20 und eine in Radialrichtung außenliegende, äußere Flussbarriere 22. Jeweils zwischen zwei der Kreissektoren verläuft eine d-Achse des Rotors 14.

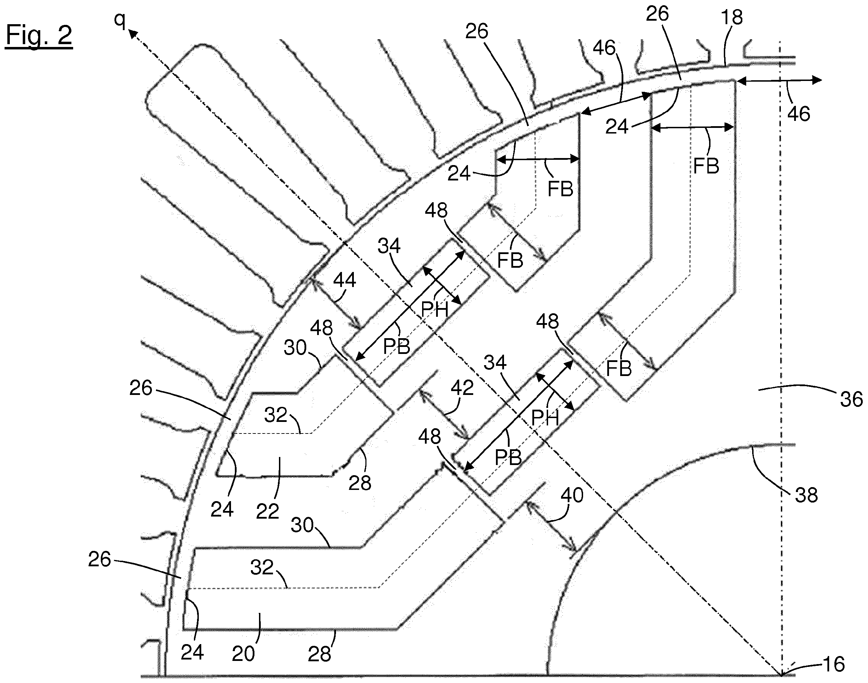

Einzelheiten der Flussbarrieren 20, 22 werden anhand des in Fig. 2 vergrößert dargestellten Ausschnitts, der einen der Kreissektoren des Rotors 14 zeigt, beschrieben. Man erkennt dort die mittig verlaufende q Achse wieder. Die beiden Flussbarrieren 20, 22 sind jeweils symmetrisch zu der q-Achse ausgebildet. Jede der Flussbarrieren 20, 22 weist zwei Enden 24 auf, die jeweils von einem tangential angeordneten Steg 26 von dem Außenumfang 18 des Rotors 14 getrennt sind. Im dargestellten Beispiel weisen die Stege 26 jeweils eine über ihre gesamte Erstreckung in Richtung des Außenumfangs 18 gleichmäßige Breite auf.

Außerdem hat jede der Flussbarrieren 20, 22 eine radial innere Grenzlinie 28 und eine radial äußere Grenzlinie 30, zwischen denen mittig die Mittellinie 32 der jeweiligen Flussbarriere 20, 22 verläuft.

Jede der Flussbarrieren 20, 22 weist einen Permanentmagneten 34 auf, der auf der q-Achse angeordnet ist und der eine Permanentmagnethöhe PH und eine Permanentmagnetbreite PB aufweist. Die Grundform der Permanentmagneten 34 ist rechteckig und alle Permanentmagneten 34 weisen dieselbe Permanentmagnethöhe PH und dieselbe Permanentmagnetbreite PB auf.

Die Flussbarrieren 20, 22 sind als Ausschnitte in einem magnetflussleitenden Material, im Beispiel ein Elektroblech 36, ausgebildet. Die Breite FB der Flussbarrieren 20, 22 wird senkrecht zu der jeweiligen Mittellinie 32 betrachtet. Benachbart zu dem jeweiligen Permanentmagneten 34 sind die Breiten FB der Flussbarrieren 20, 22 jeweils etwas größer als die Höhen PH der Permanentmagneten 34. Das Verhältnis der Permanentmagnethöhe PH zur Breite FB der zugehörigen Flussbarriere 20 bzw. 22 benachbart zu dem jeweiligen Permanentmagneten 34 liegt bei der Erfindung im Bereich von 0,5 bis 0,9.

Um seine Rotationsachse 16 herum weist der Rotor 14 einen kreisförmigen Ausschnitt 38 auf, der zur Aufnahme einer Motorwelle vorgesehen ist. Man erkennt in der Fig. 2, dass die Abstände zwischen diesem kreisförmigen Ausschnitt 38 und der ineren Grenzlinie 28 der inneren Flussbarriere 20 (Pfeil 40), der Abstand zwischen der äußeren Grenzlinie 30 der inneren Flussbarriere 20 und der inneren Grenzlinie 28 der äußeren Flussbarriere 22 (Pfeil 42) sowie der Abstand zwischen der äußeren Grenzlinie 30 der äußeren Flussbarriere 22 und dem Außenumfang 18 im Bereich der q-Achse (Pfeil 44) etwa gleich groß sind. Ebenfalls etwa gleich groß sind die mit den Pfeilen 46 bezeichneten Abstände (siehe auch Fig. 1) zwischen jeweils zwei benachbarten Flussbarrieren, betrachtet am Außenumfang 18.

In Fig. 2 ist außerdem erkennbar, dass die Anordnung der Permanentmagneten 34 in Richtung der q-Achse versetzt zu den jeweiligen Mittellinien 32 der zugehörigen Flussbarrieren 20 bzw. 22 gewählt ist. Dieser Versatz so gewählt, dass die radial äußeren Enden der Permanentmagneten 34 bündig mit den äußeren Grenzlinien 30 der jeweiligen Flussbarriere 20, 22 abschließen.

Zwischen den Permanentmagneten 34 und den angrenzenden Ausschnitten der jeweiligen Flussbarrieren 22 bzw. 20 sind Stege 48 ausgebildet, die die Permanentmagneten 34 seitlich einfassen.

### Liste der verwendeten Bezugszeichen

- 10: Stator
- 12: Statorpol
- 14: Rotor
- 16: Rotationsachse
- 18: Außenumfang
- 20: innere Flussbarriere
- 22: äußere Flussbarriere
- 24: Ende
- 26: Steg
- 28: innere Grenzlinie
- 30: äußere Grenzlinie
- 32: Mittellinie
- 34: Permanentmagnet
- 36: Elektroblech
- 38: Ausschnitt
- 40: Abstand
- 42: Abstand
- 44: Abstand
- 46: Pfeil
- 48: Steg
- PB: Permanentmagnetbreite
- PH: Permanentmagnethöhe
- FB: Breite einer Flussbarriere

## Patentansprüche

1. Rotor (14) für einen Synchron-Reluktanzmotor, wobei der Rotor (14) einen Querschnitt mit einem Außenumfang (18) und einer Anzahl von Kreissektoren aufweist, wobei jeder Kreissektor eine q-Achse und eine Anzahl von Flussbarrieren (20, 22) aufweist, wobei jede Flussbarriere (20, 22) symmetrisch zu der q-Achse ausgebildet ist und folgendes aufweist:
• zwei Enden (24), die jeweils von einem tangential angeordneten Steg (26) von dem Außenumfang (18) getrennt sind,
• eine zwischen den beiden Enden (24) verlaufende Mittellinie (32),
• eine orthogonal zu der Mittellinie (32) zu messende Breite (FB) und
• einen auf der q-Achse angeordneten Permanentmagneten (34), wobei
• die Breiten (FB) der Flussbarrieren, jeweils gemessen benachbart zu dem jeweiligen Permanentmagneten (34), sich um nicht mehr als 20% voneinander unterscheiden,
• alle Permanentmagneten (34) in Richtung der q-Achse dieselbe Permanentmagnethöhe (PH) und orthogonal zu der q-Achse dieselbe Permanentmagnetbreite (PB) aufweisen, **dadurch gekennzeichnet, dass**
• das Verhältnis der Permanentmagnethöhe (PH) zur Breite (FB) der zugehörigen Flussbarriere (20, 22), gemessen benachbart zu dem jeweiligen Permanentmagneten (34), im Bereich von 0,5 bis 0,9 liegt.

2. Rotor (14) für einen Synchron-Reluktanzmotor nach Anspruch 1, **dadurch gekennzeichnet, dass** alle Flussbarrieren (20, 22), jeweils gemessen benachbart zu dem jeweiligen Permanentmagneten (34), die gleiche Breite (FB) aufweisen.

3. Rotor (14) für einen Synchron-Reluktanzmotor nach Anspruch 1 oder 2, **dadurch gekennzeichnet, dass** die Abstände (42) zwischen je zwei benachbarten Flussbarrieren (20, 22) sich um nicht mehr als 20 % voneinander unterscheiden.

4. Rotor (14) für einen Synchron-Reluktanzmotor nach einem der Ansprüche 1 bis 3, **dadurch gekennzeichnet, dass** das Verhältnis der Permanentmagnethöhe (PB) zur Breite (FB) der zugehörigen Flussbarriere (20, 22), gemessen benachbart zu dem jeweiligen Permanentmagneten (34), im Bereich von 0,7 bis 0,85 liegt.

5. Rotor (14) für einen Synchron-Reluktanzmotor nach einem der Ansprüche 1 bis 4, **dadurch gekennzeichnet, dass** die Flussbarrieren (20, 22) als Ausschnitte in einem magnetflussleitenden Material ausgebildet sind, wobei in mindestens einer Flussbarriere (20, 22) mindestens ein quer zu seiner Mittellinie (32) angeordneter Steg (48) ausgebildet ist.

6. Rotor (14) für einen Synchron-Reluktanzmotor nach einem der Ansprüche 1 bis 5, **dadurch gekennzeichnet, dass** jede der Flussbarrieren (20, 22) zwei der Stege (48) aufweist, die den jeweiligen Permanentmagneten (34) seitlich einfassen.

7. Rotor (14) für einen Synchron-Reluktanzmotor nach einem der Ansprüche 1 bis 6, **dadurch gekennzeichnet, dass** die Permanentmagneten (34) in Richtung der q-Achse relativ zu der Mittellinie (32) der jeweils zugehörigen Flussbarriere (20, 22) versetzt angeordnet sind.

8. Rotor (14) für einen Synchron-Reluktanzmotor nach Anspruch 7, **dadurch gekennzeichnet, dass** die Permanentmagneten (34) derart versetzt angeordnet sind, dass ihre radial nach außen weisenden Enden jeweils bündig mit einer radial äußeren Grenzlinie (30) der zugehörigen Flussbarriere (20, 22) abschließen.

9. Rotor (14) für einen Synchron-Reluktanzmotor nach einem der Ansprüche 1 bis 8, **dadurch gekennzeichnet, dass** die Abstände (46) zwischen je zwei benachbarten Flussbarrieren (20, 22) entlang des Außenumfangs (18) gleich groß sind.

10. Rotor (14) für einen Synchron-Reluktanzmotor nach einem der Ansprüche 1 bis 9, **dadurch gekennzeichnet, dass** die Breite (FB) einer Flussbarriere (20, 22) nahe dem Außenumfang (18) geringer ist als benachbart zu dem jeweiligen Permanentmagneten (34).

11. Rotor (14) für einen Synchron-Reluktanzmotor nach einem der Ansprüche 1 bis 10, **dadurch gekennzeichnet, dass** jede Flussbarriere (20, 22) genau einen Permanentmagneten (34) aufweist.

12. Rotor (14) für einen Synchron-Reluktanzmotor nach einem der Ansprüche 1 bis 11, **dadurch gekennzeichnet, dass** genau vier Kreissektoren vorhanden sind.

13. Rotor (14) für einen Synchron-Reluktanzmotor nach einem der Ansprüche 1 bis 12, **dadurch gekennzeichnet, dass** jeder Kreissektor genau zwei, genau drei oder genau vier Flussbarrieren (20, 22) aufweist.

## Claims

1. A rotor (14) for a synchronous reluctance motor, wherein the rotor (14) has a cross-section with an outer circumference (18) and a number of circle sectors, wherein each circle sector has a q axis and a number of flow barriers (20, 22), wherein each flow barrier (20, 22) is designed to be symmetrical with respect to the q axis and comprises the following:
• two ends (24), which are each separated from the outer circumference (18) by a tangentially arranged web (26),
• a center line (32) that extends between the two ends (24),
• a width (FB) to be measured orthogonally to the center line (32), and
• a permanent magnet (34) arranged on the q axis, wherein
• the widths (FB) of the flow barriers, in each case measured adjacently to the relevant permanent magnet (34), do not differ from one another by more than 20%,
• all permanent magnets (34) have the same permanent magnet height (PH) in the direction of the q axis and the same permanent magnet width (PB) orthogonally to the q axis, **characterized in that**
• the ratio of the permanent magnet height (PH) to the width (FB) of the associated flow barrier (20, 22), measured adjacently to the relevant permanent magnet (34), is in the range of 0.5 to 0.9.

2. The rotor (14) for a synchronous reluctance motor according to claim 1, **characterized in that** all flow barriers (20, 22), in each case measured adjacently to the relevant permanent magnet (34), have the same width (FB).

3. The rotor (14) for a synchronous reluctance motor according to claim 1 or 2, **characterized in that** the distances (42) between any two adjacent flow barriers (20, 22) do not differ from one another by more than 20%.

4. The rotor (14) for a synchronous reluctance motor according to any one of claims 1 to 3, **characterized in that** the ratio of the permanent magnet height (PB) to the width (FB) of the associated flow barrier (20, 22), measured adjacently to the relevant permanent magnet (34), is in the range of 0.7 to 0.85.

5. The rotor (14) for a synchronous reluctance motor according to any one of claims 1 to 4, **characterized in that** the flow barriers (20, 22) are formed as cut-outs in a magnetically conductive material, wherein at least one web (48) is formed in at least one flow barrier (20, 22) so as to be arranged transversely to the center line (32) thereof.

6. The rotor (14) for a synchronous reluctance motor according to any one of claims 1 to 5, **characterized in that** each of the flow barriers (20, 22) comprises two of the webs (48) that laterally enclose the relevant permanent magnet (34).

7. The rotor (14) for a synchronous reluctance motor according to any one of claims 1 to 6, **characterized in that** the permanent magnets (34) are arranged so as to be offset in the direction of the q axis relative to the center line (32) of the respectively associated flow barrier (20, 22).

8. The rotor (14) for a synchronous reluctance motor according to claim 7, **characterized in that** the permanent magnets (34) are arranged so as to be offset such that the radially outwardly pointing ends thereof each end flush with a radially outer boundary line (30) of the associated flow barrier (20, 22).

9. The rotor (14) for a synchronous reluctance motor according to any one of claims 1 to 8, **characterized in that** the distances (46) between any two adjacent flow barriers (20, 22) are the same along the outer circumference (18).

10. The rotor (14) for a synchronous reluctance motor according to any one of claims 1 to 9, **characterized in that** the width (FB) of a flow barrier (20, 22) close to the outer circumference (18) is less than adjacently to the relevant permanent magnet (34).

11. The rotor (14) for a synchronous reluctance motor according to any one of claims 1 to 10, **characterized in that** each flow barrier (20, 22) comprises exactly one permanent magnet (34).

12. The rotor (14) for a synchronous reluctance motor according to any one of claims 1 to 11, **characterized in that** there are exactly four circle sectors.

13. The rotor (14) for a synchronous reluctance motor according to any one of claims 1 to 12, **characterized in that** each circle sector comprises exactly two, exactly three or exactly four flow barriers (20, 22).

## Revendications

1. Rotor (14) pour un moteur à reluctance synchrone, le rotor (14) présentant une section transversale avec une circonférence extérieure (18) et un nombre de secteurs circulaires, dans lequel chaque secteur circulaire présente un axe q et un nombre de barrières de flux (20, 22), dans lequel chaque barrière de flux (20, 22) est conçue symétriquement à l'axe q et présente les caractéristiques suivantes :
- deux extrémités (24) respectivement séparées de la circonférence extérieure (18) par une âme (26) disposée tangentiellement,
- une ligne médiane (32) s'étendant entre les deux extrémités (24),
- une largeur (FB) à mesurer orthogonalement à la ligne médiane (32), et
- un aimant permanent (34) disposé sur l'axe q, dans lequel
- les largeurs (FB) des barrières de flux, mesurées respectivement à proximité de l'aimant permanent (34) respectif, diffèrent les unes des autres de pas plus de 20%,
- tous les aimants permanents (34) présentent la même hauteur d'aimant permanent (PH) dans la direction de l'axe q et la même largeur d'aimant permanent (PB) orthogonalement à l'axe q, **caractérisé en ce que**
- le rapport de la hauteur d'aimant permanent (PH) à la largeur (FB) de la barrière de flux (20, 22) correspondante, mesurées à proximité de l'aimant permanent (34) respectif, est compris entre 0,5 et 0,9.

2. Rotor (14) pour un moteur à reluctance synchrone selon la revendication 1, **caractérisé en ce que** toutes les barrières de flux (20, 22), respectivement mesurées à proximité de l'aimant permanent (34) respectif, présentent la même largeur (FB).

3. Rotor (14) pour un moteur à reluctance synchrone selon la revendication 1 ou 2, **caractérisé en ce que** les écarts (42) entre deux barrières de flux (20, 22) voisines diffèrent les uns des autres de pas plus de 20%.

4. Rotor (14) pour un moteur à reluctance synchrone selon l'une des revendications 1 à 3, **caractérisé en ce que** le rapport de la hauteur d'aimant permanent (PB) à la largeur (FB) de la barrière de flux (20, 22) correspondante, mesurées à proximité de l'aimant permanent (34) respectif, est compris entre 0,7 et 0,85.

5. Rotor (14) pour un moteur à reluctance synchrone selon l'une des revendications 1 à 4, **caractérisé en ce que** les barrières de flux (20, 22) sont formées comme des découpes dans un matériau conducteur de flux magnétique, dans lequel au moins une âme (48) est formée dans au moins une barrière de flux (20, 22), en étant disposée transversalement à la ligne médiane (32) de celle-ci.

6. Rotor (14) pour un moteur à reluctance synchrone selon l'une des revendications 1 à 5, **caractérisé en ce que** chacune des barrières de flux (20, 22) présente deux des âmes (48) bordant latéralement l'aimant permanent (34) respectif.

7. Rotor (14) pour un moteur à reluctance synchrone selon l'une des revendications 1 à 6, **caractérisé en ce que** les aimants permanents (34) sont disposés en décalage par rapport à la ligne médiane (32) de la barrière de flux (20, 22) respectivement correspondante dans la direction de l'axe q.

8. Rotor (14) pour un moteur à reluctance synchrone selon la revendication 7, **caractérisé en ce que** les aimants permanents (34) sont disposés en décalage de telle façon que leurs extrémités tournées radialement vers l'extérieur se terminent respectivement en affleurement avec une ligne de délimitation (30) radialement extérieure de la barrière de flux (20, 22) correspondante.

9. Rotor (14) pour un moteur à reluctance synchrone selon l'une des revendications 1 à 8, **caractérisé en ce que** les écarts (46) entre deux barrières de flux (20, 22) voisines sont de la même taille le long de la circonférence extérieure (18).

10. Rotor (14) pour un moteur à reluctance synchrone selon l'une des revendications 1 à 9, **caractérisé en ce que** la largeur (FB) d'une barrière de flux (20, 22) à proximité de la circonférence extérieure (18) est plus petite qu'à côté de l'aimant permanent (34) respectif.

11. Rotor (14) pour un moteur à reluctance synchrone selon l'une des revendications 1 à 10, **caractérisé en ce que** chaque barrière de flux (20, 22) présente exactement un aimant permanent (34).

12. Rotor (14) pour un moteur à reluctance synchrone selon l'une des revendications 1 à 11, **caractérisé en ce qu'**il est prévu exactement quatre secteurs circulaires.

13. Rotor (14) pour un moteur à reluctance synchrone selon l'une des revendications 1 à 12, **caractérisé en ce que** chaque secteur circulaire présente exactement deux, exactement trois ou exactement quatre barrières de flux (20, 22).
